(19) Europäisches Patentamt
European Patent Office
Office européen des brevets

(11) Veröffentlichungsnummer : **0 126 359**
**B1**

(12) # EUROPÄISCHE PATENTSCHRIFT

(45) Veröffentlichungstag der Patentschrift : **05.04.89**

(21) Anmeldenummer : **84105086.7**

(22) Anmeldetag : **05.05.84**

(51) Int. Cl.⁴ : **C 08 F 20/36**, C 08 F283/00, C 08 G 18/81, C 07 D251/34, C 09 D 3/80

(54) **Verfahren zur Herstellung von Isocyanuratgruppen und olefinische Doppelbindungen aufweisenden Verbindungen, die nach diesem Verfahren erhältlichen Verbindungen und ihre Verwendung als Bindemittel bzw. Bindemittelkomponente in Überzugsmitteln.**

(30) Priorität : **18.05.83 DE 3318147**

(43) Veröffentlichungstag der Anmeldung : **28.11.84 Patentblatt 84/48**

(45) Bekanntmachung des Hinweises auf die Patenterteilung : **05.04.89 Patentblatt 89/14**

(84) Benannte Vertragsstaaten : **DE FR GB IT NL**

(56) Entgegenhaltungen :
**US-A- 4 128 537**
**US-A- 4 145 544**

(73) Patentinhaber : **BAYER AG**
**Konzernverwaltung RP Patentabteilung**
**D-5090 Leverkusen 1 Bayerwerk (DE)**

(72) Erfinder : **Noll, Klaus, Dr.**
**Morgengraben 6**
**D-5000 Koeln 80 (DE)**
Erfinder : **Pedain, Josef, Dr.**
**Haferkamp 6**
**D-5000 Koeln 80 (DE)**
Erfinder : **Bock, Manfred, Dr.**
**Haydnstrasse 18**
**D-5090 Leverkusen (DE)**

**EP 0 126 359 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein neues Verfahren zur Herstellung von Isocyanuratgruppen und olefinische Doppelbindungen aufweisenden Verbindungen durch Umsetzung von Isocyanuratgruppen aufweisenden Polyisocyanaten mit Verbindungen mit gegenüber Isocyanatgruppen reaktionsfähigen Wasserstoffatomen und olefinischen Doppelbindungen, die nach diesem Verfahren erhältlichen Umsetzungsprodukte, sowie ihre Verwendung als Bindemittel bzw. Bindemittelkomponente in, durch den Einfluß energiereicher Strahlung vernetzbaren, Überzugsmitteln.

Verbindungen mit olefinisch ungesättigten Gruppen als Bindemittel enthaltende Überzugsmittel sind seit langer Zeit bekannt. Sie werden mit Hilfe energiereicher Strahlen wie UV- oder Elektronenstrahlen gehärtet und dienen z. B. zum Beschichten von thermisch sensiblen Substraten wie etwa Holz oder zur Herstellung von Überzügen zu grafischen Zwecken, also etwa in der Druckindustrie oder bei der Erzeugung elektrischer Leiterplatten.

Eine Untergruppe solcher strahlenvernetzender Überzugsmittel sind Urethanoligomere, die mit Verbindungen modifiziert sind, welche sowohl ethylenisch ungesättigte, also auch gegenüber Isocyanatgruppen reaktive, Gruppen enthalten. Solche Oligomere sind, besonders für Anwendungen in der Druckindustrie, bekannt und beispielsweise in DE-OS 2 115 373 und 2 121 253 und GB-PS 1 379 228 beschrieben.

In neuerer Zeit sind, wiederum für Anwendungen in der Druckindustrie, strahlenvernetzende Überzugsmittel beschrieben worden, denen unterschiedliche Arten von Oligourethanen zugrunde liegen können (GB-PS 1 491 695).

Unter ihnen ist besonders ein mit ethylenisch ungesättigten Gruppen modifiziertes Polyisocyanat bemerkenswert, da es über den in der genannten Patentschrift angeführten Zweck hinaus für die Herstellung von hochwertigen Lacken gut geeignet ist. Dieses besondere Oligourethan basiert auf dem Biuretgruppen aufweisenden aliphatischen Polyisocyanat der idealisierten Formel

$$OCN-R-NH-CO-\underset{\substack{|\\ R\\ |\\ NCO}}{N}-CO-NH-R-NCO$$

($R = -(CH_2)_6-$)

Olefinisch ungesättigte Oligourethane auf Basis dieses Polyisocyanats, d. h. insbesondere seine Umsetzungsprodukte, mit Hydroxyalkyl-acrylat bzw. -methacrylat lassen sich unter dem Einfluß energiereicher Strahlung zu hochvernetzten, harten Überzügen umsetzen, bzw. sie eignen sich als Zusätze zu konventionellen strahlenvernetzbaren Überzugsmitteln, denen sie z. B. höhere Härte oder bessere Abriebfestigkeit verleihen. Besonders vorteilhaft ist aber die Tatsache, daß sie die Herstellung von Überzügen bei Raumtemperatur und so die Beschichtung thermosensibler Substrate von Holz, Papier oder Leder ermöglichen.

Die genannten Oligourethane weisen jedoch auch einige Nachteile auf. So tritt bei der Strahlenvernetzung eine mehr oder weniger starke Verfärbung auf, die sich besonders bei der Beschichtung weißer und hellfarbener Substrate nachteilig auswirkt ; außerdem ist die Wetterbeständigkeit oft nicht ausreichend.

Wie jetzt überraschend gefunden wurde, ist es möglich, diese Nachteile dadurch zu überwinden, daß man zur Herstellung der olefinisch ungesättigten Isocyanat-Additionsprodukte Isocyanuratgruppen aufweisende Polyisocyanate auf Basis von Hexamethylendiisocyanat und/oder 1-Isocyanato-3,3,5-trimethyl-5-isocyanatomethyl-cyclohexan, d. h., auf Basis von aliphatischen und/oder cycloaliphatischen Polyisocyanaten verwendet. Dieser Befund ist insbesondere im Hinblick auf die Tatsache überraschend, daß Zweikomponenten-Polyurethanlacke sowohl auf Basis von Biuretgruppen aufweisenden aliphatischen Polyisocyanaten als auch auf Basis von Isocyanuratgruppen aufweisenden aliphatischen Polyisocyanaten gleichermaßen die Herstellung von licht- und verwitterungsbeständigen Überzügen gestatten, so daß nicht erwartet werden konnte, daß strahlenvernetzbare Bindemittel auf Basis von Isocyanuratgruppen aufweisenden Polyisocyanaten sich bezüglich dieser Eigenschaften von solchen auf Basis von Biuretgruppen aufweisenden Polyisocyanaten vorteilhaft unterscheiden würden.

Die US-PS 4 145 544 beschreibt zwar bereits die Herstellung von Umsetzungsprodukten von Isocyanatgruppen aufweisenden Trimerisaten mit olefinisch ungesättigten Hydroxylverbindungen der auch erfindungsgemäß einzusetzenden Art, jedoch ist das Verfahren dieser Vorveröffentlichung (obwohl Hexamethylendiisocyanat beiläufig als Ausgangsmaterial erwähnt wird) im wesentlichen auf aromatische Diisocyanate als Ausgangsmaterialien eingeschränkt, wobei außerdem die Trimerisierungsreaktion in Gegenwart von olefinisch ungesättigten Monomeren und in Gegenwart von Polymerisationsinhibitoren durchgeführt wird. Dieses Verfahren ist im Vergleich zum nachstehend näher beschriebenen erfindungsgemäßen Verfahren mit einer Reihe von Nachteilen behaftet :

Eine Dünnschichtung des Trimerisats zwecks Entfernung von monomeren Ausgangsdiisocyanaten ist nicht möglich. Demzufolge entstehen bei der anschließenden Umsetzung des Trimerisats mit den Hydroxylgruppen aufweisenden Acrylaten aus den noch vorliegenden Diisocyanaten die entsprechenden

Bisacrylate, die im Falle von aliphatischen Diisocyanaten wie beispielsweise Hexamethylendiisocyanat oftmals kristalline Substanzen darstellen, die zu einer Eintrübung der Verfahrensprodukte führen.

die Durchführbarkeit des Verfahrens ist nur am Beispiel von aromatischen Ausgangsdiisocyanaten dokumentiert. Die entsprechenden Verfahrensprodukte weisen demzufolge eine vergleichsweise schlechtere Lichtechtheit auf.

Die in der US-PS 4 128 537 beschriebene Variante der Herstellung von olefinisch ungesättigten Isocyanuraten, gemäß welcher zunächst ein Teil der Isocyanuratgruppen eines aromatischen Diisocyanats mit einem Hydroxylgruppen aufweisenden Acrylat umgesetzt und anschließend der verbleibende Teil der Isocyanatgruppen trimerisiert wird, ist mit den gleichen Nachteilen behaftet, wobei erschwerend hinzukommt, daß bei der Umsetzung des Ausgangsdiisocyanats mit dem Hydroxyacrylat, beispielsweise im NCO/OH-verhältnis von 2 : 1, ein statistisches Gemisch aus freiem Ausgangsdiisocyanat, Monoisocyanato-monoacrylat und Bisacrylat entsteht, was eine gezielte Herstellung von definierten Verfahrensprodukten der Art der erfindungsgemäßen Verfahrensprodukte unmöglich macht.

Gegenstand der Erfindung ist ein Verfahren zur Herstellung von unter dem Einfluß energiereicher Strahlung vernetzbaren, Isocyanuratgruppen, olefinische Doppelbindungen und gegebenenfalls Isocyanatgruppen aufweisenden Verbindungen, dadurch gekennzeichnet, daß man

(i) gegebenenfalls im Gemisch mit bis zu 5 NCO-Äquivalentprozent an den entsprechenden Uretdiondiisocyanaten vorliegende, durch Trimerisierung eines Teils der Isocyanatgruppen von Hexamethylendiisocyanat und/oder 1-Isocyanato-3,3,5-trimethyl-5-isocyanatomethyl-cyclohexan und anschließende Entfernung von nicht-umgesetztem Ausgangsdiisocyanat durch Dünnschichtdestillation erhaltene, Isocyanuratgruppen aufweisende Polyisocyanate
mit

(ii) mindestens eine gegenüber Isocyanatgruppen reaktionsfähige Gruppe und mindestens eine olefinische Doppelbindung aufweisenden Verbindungen, ausgewählt aus der Gruppe bestehend aus Hydroxylgruppen aufweisenden Estern der Acrylsäure und/oder Methacrylsäure mit mindestens zweiwertigen aliphatischen Alkoholen des Molekulargewichtsbereichs 62 bis 300,

unter Urethanbildung zur Reaktion bringt, wobei man die Mengenverhältnisse der Reaktionspartner so wählt, daß im Reaktionsgemisch für jede freie Isocyanatgruppe der Komponente (i) 0,9 bis 1,5 Hydroxylgruppen der Komponente (ii) vorliegen.

Gegenstand der Erfindung ist auch die Verwendung der nach diesem Verfahren erhältlichen Isocyanuratgruppen und olefinische Doppelbindungen aufweisenden von monomeren Diisocyanaten befreiten Umsetzungsprodukten als Bindemittel bzw. Bindemittelkomponente in, durch den Einfluß energiereicher Strahlung vernetzbaren, Überzugsmitteln.

Beim erfindungsgemäßen Verfahren werden als Komponente (i) Isocyanuratgruppen aufweisende Polyisocyanate auf Basis von Hexamethylendiisocyanat und/oder 1-Isocyanato-3,3,5-trimethyl-5-isocyanatomethyl-cyclohexan (Isophorondiisocyanat = IPDI) eingesetzt. Die Herstellung derartiger Isocyanuratgruppen aufweisender Polyisocyanate ist beispielsweise in EP-OS 3765, EP-OS 10 589 oder EP-OS 47 452 beschrieben. Die Isocyanuratgruppen aufweisenden Polyisocyanate weisen einen NCO-Gehalt von 10-25 Gew.-% auf. Es handelt sich bei diesen Verbindungen um einfache Tris-isocyanatoalkyl-(bzw. -cycloalkyl-) isocyanurate der Formel

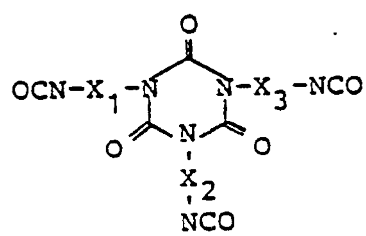

bzw. deren Gemische mit ihren höheren, mehr als einen Isocyanuratring aufweisenden Homologen, wobei in dieser Formel $X_1$, $X_2$ und $X_3$ für gleiche oder verschiedene Reste stehen und den, dem Ausgangsdiisocyanat zugrundeliegenden Kohlenwasserstoffrest bedeuten.

Die Isocyanuratgruppen aufweisenden Polyisocyanate können auch im Gemisch mit bis zu 5 NCO-Äquivalentprozent an Uretdiondiisocyanaten mit aliphatisch und/oder cycloaliphatisch gebundenen Isocyanatgruppen der Formel

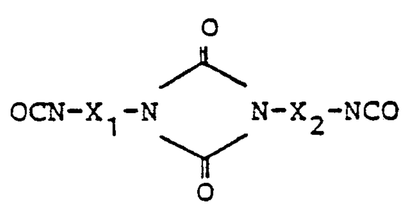

die oftmals in untergeordneten Mengen (0,1 bis 5, insbesondere 0,3 bis 3 NCO-Äquivalentprozent) neben den Isocyanuratgruppen aufweisenden Polyisocyanaten bei der Trimerisierungsreaktion von aliphatischen und/oder cycloaliphatischen Diisocyanaten entstehen.

Bei der Komponente (ii) handelt es sich um Hydroxylgruppen aufweisende Ester der Acrylsäure und/oder Methacrylsäure mit mindestens zweiwertigen aliphatischen Alkoholen des Molekulargewichtsbereichs 62 bis 300. Typische derartige Verbindungen sind beispielsweise 2-Hydroxyethylacrylat, 2-Hydroxyethylmethacrylat, 2-Hydroxypropylacrylat, 2-Hydroxypropylmethacrylat, 3- und 4-Hydroxybutylacrylat, 3- und 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethyl-hexylmethacrylat, die Di (meth) acrylsäureester des 1,1,1-Trimethylolpropans oder des Glycerins. Besonders bevorzugte Ausgangskomponenten (ii) sind 2-Hydroxyethyl- und 2-Hydroxypropylacrylat- bzw. -methacrylat. Beliebige Gemische derartiger Verbindungen können selbstverständlich ebenfalls eingesetzt werden.

Die erfindungsgemäße Umsetzung erfolgt im allgemeinen durch Vermischen der Komponenten bei erhöhter Temperatur. Diese sollte 40 bis 100 °C, vorzugsweise 50 bis 80 °C, betragen, generell ist dafür zu sorgen, daß unerwünschte thermisch induzierte Polymerisationsreaktionen unterbunden werden. Es ist daher oft zweckmäßig, bei relativ niedrigen Temperaturen innerhalb der genannten Temperaturbereiche und unter Verwendung von bekannten, die Isocyanat-Additionsreaktion beschleunigenden Katalysatoren, zu arbeiten. Geeignete Katalysatoren sind beispielsweise Alkalimetallalkoholate wie Natriumethylat, tertiäre Amine wie Triethylamin, Diethylentriamin oder Dimethylbenzylamin oder beispielsweise bekannte Zinn-Katalysatoren wie Zinndioctoat oder Dibutylzinn-dilaurat. Die Umsetzung kann in Substanz oder in Gegenwart von inerten Lösungsmitteln wie z. B. Ethylacetat, Butylacetat, Ethylglykolacetat und/oder Methyl-isobutylketon erfolgen.

Bei der Durchführung der erfindungsgemäßen Umsetzung werden die Mengenverhältnisse der Reaktionspartner so gewählt, daß für jede freie Isocyanatgruppe der Polyisocyanatkomponente (i), die sich aus den Isocyanuratgruppen aufweisenden Polyisocyanaten und gegebenenfalls Isocyanuratgruppen-freien Polyisocyanaten zusammensetzt, 0,9 bis 1,5, vorzugsweise 1,0 bis 1,2 Hydroxylgruppen der Komponente (ii) im Reaktionsgemisch vorliegen. Bei Verwendung erfindungsgemäßer Umsetzung unter Verwendung stöchiometrischer Mengen der Ausgangsmaterialien entstehen Isocyanatgruppen-freie, olefinisch ungesättigte Verfahrensprodukte, die strahlenvernetzbare Bindemittel bzw. Bindemittelkomponenten für Überzugsmittel darstellen. Bei Verwendung eines stöchiometrischen Unterschusses der Komponente (ii) entstehen Verfahrensprodukte, die neben olefinischen Doppelbindungen freie Isocyanatgruppen aufweisen. Diese erfindungsgemäßen Verfahrensprodukte eignen sich beispielsweise als Bindemittel bzw. Bindemittelkomponente in Kombination mit Verbindungen mit gegenüber Isocyanatgruppen reaktionsfähigen Gruppen, wie beispielsweise den aus der Polyurethanlackchemie bekannten Polyhydroxypolyestern und/oder Polyhydroxypolyacrylaten, mit denen sie als Polyisocyanatkomponente als Zweikomponenten-System verarbeitet werden können. Derartige Systeme können im Anschluß an die spontan ablaufende (freie Isocyanatgruppen) bzw. nach Hitzehärtung stattgefundene Polyurethanbildung durch energiereiche Strahlung in den endvernetzten Zustand überführt werden.

Die erfindungsgemäßen Verfahrensprodukte weisen

a) einen Gehalt an Isocyanuratgruppen (Molekulargewicht = 126) von 5-20 Gew.-%

und

b) einen Gehalt an olefinischen Doppelbindungen C = C (Molekulargewicht = 24) von 2-15 Gew.-%

auf.

Die erfindungsgemäßen, durch den Einfluß energiereicher Strahlungen vernetzbaren Verfahrensprodukte stellen im allgemeinen klare, mittel- bis hochviskose und farblose Flüssigkeiten dar. Ist ihre Viskosität für die gewünschte Anwendung zu hoch, so können sie mit Lösungsmitteln verdünnt werden. Hierzu können aromatische Kohlenwasserstoffe, wie z. B. Toluol, Xylole und höher substituierte Benzole, Ester, wie etwa Ethylacetat, Butylacetat, Methoxy- oder Ethoxyethylacetat, Butoxyethylacetat, und Ketone wie Aceton, Methylethylketon, Methylisobutylketon oder Cyclohexanon, aber auch Alkohole, wie Methanol, Ethanol, Propanol, i-Propanol, Butanol, i-Butanol usw. herangezogen werden ; letztere jedoch nur, wenn die erfindungsgemäßen Bindemittel keine freien Isocyanatgruppen mehr aufweisen.

Im weiteren Sinne als Lösungsmittel können auch ethylenisch ungesättigte niedermolekulare Verbindungen angesehen werden, wie etwa Ester der Acryl- oder Methacrylsäure mit aliphatischen $C_1$-$C_8$-, cycloaliphatischen $C_5$-$C_6$-, araliphatischen $C_7$-$C_8$-Monoalkoholen, beispielsweise Methylacrylat, Ethylacrylat, n-Propylacrylat, n-Butylacrylat, Methylhexylacrylat, 2-Ethylhexylacrylat und die entsprechenden Methacrylsäureester ; Cyclopentylacrylat, Cyclohexylacrylat oder die entsprechenden Methacrylsäureester ; Benzylacrylat, β-Phenylethylacrylat und entsprechende Methacrylsäureester ; Hydroxyalkylester der Acryl- oder Methacrylsäure mit 2 bis 4 C-Atomen in der Alkoholkomponente, wie 2-Hydroxyethylacrylat, 2-Hydroxypropylacrylat, 3-Hydroxypropylacrylat, 2-Hydroxybutylacrylat, 4-Hydroxybutylacrylat oder entsprechende Methacrylsäureester ; Di- und Polyacrylate sowie Di- und Polymethacrylate von Glykolen mit 2 bis 6 C-Atomen und Polyolen mit 3 bis 4 Hydroxylgruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittri- und tetraacrylat sowie entsprechende Methacrylate, ferner Di (meth)-acrylate von Polyetherglykolen des Glykols, Propandiol-1,3, Butandiol-1,4, tetraoxethyliertes Trimethylolpropantrisacrylat ; aromatische Vinyl- und Divinylverbindungen, wie Styrol, Methylstyrol,

Divinylbenzol ; N-Methylolacrylamid oder N-Methylolmethacrylamid sowie entsprechende N-Methylolalkylether mit 1 bis 4 C-Atomen in der Alkylethergruppe bzw. entsprechende N-Methylolallylether, insbesondere N-Methoxymethyl (meth) acrylamid, N-Butoxymethyl (meth)-acrylamid und N-Allyloxymethyl (meth) acrylamid ; Vinylalkylether mit 1 bis 4 C-Atomen in der Alkylgruppe, wie Vinylmethylether, Vinylethylether, Vinylpropylether, Vinylbutylether ; Trimethylolpropandiallylethermono (meth) acrylat, Vinylpyridin, N-Vinylcarbazol, Triallylphosphat, Triallylisocyanurat und andere.

Diese beispielhaft aufgezählten, olefinisch ungesättigten « Lösungsmittel » stellen in Wirklichkeit keine echten Lösungsmittel dar sondern sind vielmehr als « reaktive Verdünner » anzusehen, da sie bei der Strahlenvernetzung der erfindungsgemäßen Verfahrensprodukte mit diesen unter Copolymerisation abreagieren. Falls bei der Verarbeitung der erfindungsgemäßen Verfahrensprodukte auf höhere, d. h. über dem Siedepunkt dieser reaktiven Verdünner liegende Temperaturen verzichtet werden kann (Abwesenheit von blockierten Isocyanatgruppen) werden anstelle der klassischen Lösungsmittel vorzugsweise derartige reaktive Verdünner eingesetzt.

Weitere, bei der erfindungsgemäßen Verwendung der erfindungsgemäßen Verfahrensprodukte gegebenenfalls mitzuverwendende Verbindungen mit olefinischen Doppelbindungen sind beispielsweise olefinisch ungesättigte Harze wie z. B. ungesättigte Polyesterharze, ungesättigte Kohlenwasserstoffharze oder ungesättigte Polyurethanharze, die bei der erfindungsgemäßen Verwendung der erfindungsgemäßen Verfahrensprodukte mitverwendet werden können.

Bei der erfindungsgemäßen Verwendung der erfindungsgemäßen Verfahrensprodukte im engeren Sinn (Umsetzungsprodukte von Isocyanuratgruppen aufweisenden Polyisocyanaten mit der Ausgangskomponente (ii)) in Kombination mit anderen olefinisch ungesättigten Verbindungen (Umsetzungsprodukte von Isocyanuratgruppen-freien Polyisocyanaten mit der Komponente (ii), reaktive Verdünner der beispielhaft genannten Art und/oder ungesättigte Harze der zuletzt beispielhaft genannten Art) muß jedoch darauf geachtet werden, daß der Anteil der erfindungsgemäßen Umsetzungsprodukte im engeren Sinne (Umsetzungsprodukte von Isocyanuratgruppen aufweisenden Polyisocyanaten mit der Ausgangskomponente (ii)), bezogen auf Gesamtmenge aller olefinisch ungesättigter Verbindungen, mindestens 20, vorzugsweise mindestens 40 Gew.-% beträgt.

Die erfindungsgemäßen Verfahrensprodukte bzw. ihre Kombinationen mit Verbindungen mit gegenüber Isocyanatgruppen reaktionsfähigen Gruppen (im Falle der Verwendung von Isocyanatgruppen aufweisenden erfindungsgemäßen Verfahrensprodukten) und/oder mit anderen olefinisch ungesättigten Verbindungen stellen wertvolle Bindemittel für Überzüge dar. Sie können als solche oder in Kombination mit den aus der Lacktechnologie bekannten Hilfs- und Zusatzmitteln wie z. B. Füllstoffen, Pigmenten, Lösungsmitteln, Verlaufshilfsmitteln u. dgl., sowie gegebenenfalls nach Zusatz eines Fotoinitiators zur Herstellung von Beschichtungen auf beliebigen Substraten verwendet werden. Der Auftrag dieser Beschichtungsmittel kann auf bekannte Weise durch Spritzen, Rakeln, Walzen, Streichen, Tauchen oder Gießen erfolgen. Nach Verdunsten von gegebenenfalls mitverwendeten inerten Lösungsmitteln kann die Vernetzung der Überzüge durch Bestrahlung mit energiereichen Strahlen initiiert werden. Die gegebenenfalls zusätzlich ablaufende Isocyanat-Polyadditionsreaktion kann vor oder während dieser Bestrahlung, gegebenenfalls unter Hitzeeinwirkung (Verwendung von erfindungsgemäßen Verfahrensprodukten mit freien oder blockierten Polyisocyanatgruppen in Kombination mit Polyhydroxylverbindungen) erfolgen.

Die energiereiche Strahlung kann beispielsweise in einer Bestrahlung mit Elektronen einer Spannung von 150-500 KV und einem Strom von etwa 0,1-10 mA bestehen. Die Gesamtdosierung richtet sich nach der Dicke des aufgetragenen Films und der Dichte seiner Pigmentierung (falls eine solche vorgenommen worden war). Sie kann zwischen etwa 0,1 und 50 Mrad liegen, vorzugsweise zwischen 1 und 20. 1 rad bedeutet in diesem Zusammenhang eine Strahlendosis, die einer Absorption von $10^{-5}$ Joule je Gramm des Substrates, in diesem Falle also des Überzuges, entspricht.

Der Elektronenstrahl wird in der Regel in einem Elektronenlinearbeschleuniger erzeugt, in dem die von einem erhitzten Metallkörper emittierten Elektronen in einem Gleichspannungsfeld auf eine Geschwindigkeit beschleunigt werden, die der oben angeführten Gleichspannung entspricht. Durch elektrostatische oder elektromagnetische Ablenkung läßt sich eine breite Fächerung des Strahls erreichen, so daß die ganze Breite eines beschichteten Werkstücks bestrahlt wird, wenn dieses unter der Strahlvorrichtung hindurchbewegt wird.

Auch UV-Licht ist als energiereiche Strahlung zur Initiierung der Vernetzung geeignet. Im Falle der Verwendung von UV-Licht ist es allerdings erforderlich, Zusätze hinzuzufügen, die einerseits die Inhibierung der radikalischen Vernetzung durch Luftsauerstoff verhindern und andererseits die Strahlenvernetzung initiieren.

Zusätze, die der Inhibierungsverhinderung dienen, sind beispielsweise Phenole und Phenolderivate, vorzugsweise sterisch gehinderte Phenole, die in beiden o-Stellungen zur Hydroxylgruppe Alkylsubstituenten tragen, Amine, vorzugsweise sekundäre Acrylamine und ihre Derivate, Kupfer-(I)-Salze organischer Säuren oder Anlagerungsverbindungen von Cu-(I)-halogeniden an Phosphiten.

Als Fotoinitiatoren sind die üblicherweise eingesetzten Verbindungen geeignet, beispielsweise Benzophenon sowie ganz allgemein aromatische Ketoverbindungen, die sich vom Benzophenon ableiten, wie Alkylbenzophenone, halogenmethylierte Benzophenone, gemäß DE-OS 1 949 010, Michlers Keton, Anthron, halogenierte Benzophenone. Ferner eignen sich Benzoin und seine Derivate, etwa gemäß DE-OS 1 769 168, 1 769 853, 1 769 854, 1 807 297, 1 807 301, 1 916 678 oder 2 430 081 und DE-AS

1 694 149. Ebenfalls wirksame Fotoinitiatoren stellen Anthrachinon und zahlreiche seiner Derivate dar, beispielsweise β-Methylanthrachinon, tert.-Butylanthrachinon und Anthrachinoncarbonsäureester, ebenso Oximester gemäß DE-OS 1 795 089.

Die erwähnten Fotoinitiatoren, die je nach Verwendungszweck der erfindungsgemäßen Massen in Mengen zwischen 0,1 und 20 Gew.-%, vorzugsweise 0,1 bis 5 Gew.-%, bezogen auf polymerisierbare Komponenten, eingesetzt werden, können als einzelne Substanz oder, wegen häufiger vorteilhafter synergistischer Effekte, auch in Kombination miteinander verwendet werden.

Als Strahlenquellen zur Durchführung der Fotopolymerisation können künstliche Strahler, deren Emission im Bereich von 250 bis 500 nm, vorzugsweise 300 bis 400 nm, liegt, verwendet werden. Vorteilhaft sind Quecksilberdampf-, Xenon- und Wolfram-Lampen, insbesondere Quecksilberhochdruckstrahler.

In der Regel lassen sich Schichten der erfindungsgemäßen Reaktionsprodukte mit einer Dicke zwischen 1 μm und 0,1 mm (1 μm = $10^{-3}$ mm) in weniger als 1 Sekunde zu einem Film aushärten, wenn sie mit dem Licht einer ca. 8 cm entfernten Quecksilberhochdrucklampe, beispielsweise vom Typ HTQ-7 der Firma Philips, bestrahlt werden.

Werden Füllstoffe bei der Verwendung der erfindungsgemäßen Harzmassen als UV-Licht-härtende Überzüge mitverwendet, so ist deren Einsatz auf solche beschränkt, die durch ihr Absorptionsverhalten den Polymerisationsvorgang nicht unterdrücken. Beispielsweise können Talkum, Schwerspat, Kreide, Gips, Kieselsäuren, Asbestmehle und Leichtspat als lichtdurchlässige Füllstoffe verwendet werden.

Geeignete Substrate sind Papier, Kartonage, Leder, Holz, Kunststoffe, Vlies, Textilien, keramische Materialien, mineralische Materialien, Glas, Metall, Kunstleder, fotografische Materialien wie z. B. mit fotografischer Schicht versehenes Papier, Umkehrfilme, vorzugsweise Holz, Kunststoffe, keramische Materialien, mineralische Materialien und fotografische Materialien. Da die Überzugsmittel in Sekundenbruchteilen bis zu wenigen Stunden zu Filmen mit ausgezeichneten mechanischen Eigenschaften aushärten, ist es beispielsweise möglich, einen Beschichtungsvorgang den in der Druckbranche üblichen Verarbeitungsgeschwindigkeiten anzupassen.

Weiterhin ist es ebenfalls möglich, die erfindungsgemäßen Bindemittel mit Hilfe externer Emulgatoren und gegebenenfalls üblicher, in der Emulsionstechnik angewandter, Hilfsmittel in Wasser zu emulgieren und als Emulsionen zu applizieren.

Als Emulgatoren kommen anionische, nicht-ionische, kationische, ampholytische oder hochmolekulare Stoffe sowie deren Mischungen in Frage. Entsprechende Emulgatoren sind beispielsweise in Ullmanns Enzyklopädie der technischen Chemie, Band 10, 4. Auflage, Kap. Emulsionen, S. 449 ff beschrieben. Geeignete Emulgatoren können qualitativ und quantitativ leicht durch einfache Handversuche ermittelt werden.

Die Emulsionen können 10 bis 70 Gew.-%, vorzugsweise 30 bis 70 Gew.-%, insbesondere 40 bis 60 Gew.-%, der erfindungsgemäßen Bindemittel enthalten.

In den nachfolgenden Beispielen beziehen sich alle Angaben in % und in Teilen auf Gewichtsprozente bzw. Gewichtsteile.

Die in den nachstehenden Beispielen eingesetzten, Isocyanuratgruppen aufweisenden Polyisocyanate werden wie folgt hergestellt :

1. Polyisocyanat aus Hexamethylendiisocyanat (HDI)

1 344 g HDI werden in einem Dreihalskolben bei 23 °C mit 1 ml 2-Dimethylaminomethyl-nonylphenol versetzt. Nach 5-minütigem Verrühren tropft man ebenfalls bei 23 °C innerhalb von 15 Minuten 40 ml einer 2 %igen Lösung von 2-Hydroxyethyl-trimethylammoniumhydroxid in Dimethylformamid/Methanol (8 : 1) ein.

Innerhalb dieser Zeit steigt die Temperatur auf 35 °C und nach weiteren 45 Minuten auf 40 °C an. Bei dieser Temperatur wird die Trimerisationsreaktion aufrechterhalten. Nach 6 Stunden ist ein NCO-Gehalt von 40,5 % erreicht. Das Reaktionsprodukt wird mit 0,3 ml Nonafluorbutansulfonsäure in 1 ml Dimethylformamid stabilisiert und anschließend im Hochvakuum gedünnschichtet.

Ausbeute : 417 g (31 %)
Jod-Farbzahl (DIN 6162) : 3
NCO-Gehalt : 22,0 %
Viskosität (25 °C) : 3 100 mPa.s
monomeres HDI : 0,18 %

2. Polyisocyanat aus 3-Isocyanatomethyl-3,5,5-trimethylcyclohexylisocyanat (IPDI)

1 332 g IPDI werden in einem Dreihalskolben auf 80 °C erwärmt. Aus einem Tropftrichter werden innerhalb von 45 Minuten 15 ml einer 6 %igen Lösung von 2-Hydroxyethyltrimethylammoniumhydroxid in Dimethylformamid/Methanol (4 : 1) langsam und gleichmäßig zugetropft. Hierbei steigt die Temperatur auf ca. 88 °C (90 °C sollten nicht überschritten werden ; bei zu hoher Temperatur verläuft die Trimerisierung unspezifisch und führt zu höheren Viskositäten des Endproduktes). Es wird nach

Beendigung des Zutropfens eine halbe Stunde nachgerührt, wobei die Temperatur auf 80 °C sinkt. Der NCO-Gehalt der Trimerisatlösung liegt hiernach bei 30,6 %. Im Hochvakuum wird gedünnschichtet und das Harz anschließend 75 %ig in Ethylglykolacetat gelöst.

Ausbeute (Harz) : 580 g (44 %)
Viskosität (Lösung) : 5 107 mPa.s (25 °C)
NCO-Gehalt (Lösung) : 12,5 %
freies IPDI (Lösung) : 0,18 %

3. Polyisocyanat aus einem Gemisch aus HDI und IPDI

Ein Gemisch aus 4 704 g (28 Mol) HDI und 1 554 g (7 Mol) IPDI wird bei 65 °C mit 100 ml 5 %iger Lösung von N-Dodecyl-N,N-dimethyl-N-(2-hydroxyethyl)-ammoniumhydroxid in 2-Ethylhexanol/Ethanol (8 : 1) versetzt. Die Reaktion verläuft sofort exotherm und wird durch Kühlung 10 Minuten bei 80 °C gehalten. Nach Entfernung der Kühlung steigt die Temperatur auf 96 °C an. Nach weiteren 15 Minuten sinkt die Temperatur und wird durch Heizen bei 80 °C gehalten. Nach insgesamt 1 Stunde ist der Katalysator desaktiviert. Der NCO-Gehalt des Gemisches ist dann konstant und beträgt 39,9 %. Das durch Dünnschichtdestillation von monomeren Diisocyanaten fast vollständig befreite Produkt (Restgehalt an HDI : 0,25 %, Restgehalt an IPDI : 0,37 %) hat eine geringe gelbliche Eigenfarbe, einen NCO-Gehalt von 19,8 % und eine Viskosität von 5 320 mPa.s (23 °C).

Beispiel 1

191 Teile des Polyisocyanates 1 werden in 365 Teilen wasserfreien Toluols gelöst und bei Raumtemperatur mit 174 Teilen Hydroxyethylacrylat versetzt. Nach Zusatz von 0,5 Teilen Zinndioctoat wird die Temperatur langsam auf 60 °C erhöht und die Mischung solange gerührt, bis der NCO-Gehalt auf 0 gesunken ist. Nach dem Abkühlen auf Raumtemperatur werden 1,8 Teile 2,6-Di-t-butylphenol zugesetzt und soviel Lösungsmittel durch Vakuumdestillation entfernt, bis die Konzentration 70 % beträgt. Die erhaltene Lösung ist fast farblos mit leichtem Gelbstich und besitzt eine Viskosität von ca. 5 000 mPa.s (23 °C). Der Gehalt des Oligourethans an olefinischen Doppelbindungen (MG = 24) liegt bei 7,8 %; an Isocyanuratgruppen (MG = 126) bei 13,6 %.

Beispiel 2

191 Teile des Polyisocyanats 1 werden in 90 Teilen wasserfreien Xylols gelöst und bei Raumtemperatur mit 168 Teilen 2-Hydroxypropylmethacrylat vermischt. Nach Zusatz von 0,5 Teilen Zinndioctoat wird die Temperatur langsam auf 60 °C erhöht und die Mischung solange gerührt, bis der NCO-Gehalt auf 0 gesunken ist. Nach dem Abkühlen auf Raumtemperatur werden 1,8 Teile 2,6-Di-t-butylphenol zugesetzt. Die 80 %ige Lösung ist praktisch farblos und besitzt eine Viskosität von ca. 12 000 mPa.s (23 °C). Der Gehalt des Oligourethans an olefinischen Doppelbindungen liegt bei 7,1 %; an Isocyanuratgruppen bei 12,5 %.

Beispiel 3

336 Teile der Polyisocyanatlösung 2 werden mit 50 Teilen Ethylglykolacetat verdünnt und bei Raumtemperatur mit 152 Teilen Hydroxyethylmethacrylat versetzt. Nach dem Zusatz von 1 Teil Zinndioctoat wird die Temperatur langsam auf 70 °C erhöht und die Mischung solange gerührt, bis der NCO-Gehalt auf 0 gesunken ist. Nach dem Abkühlen auf Raumtemperatur werden 2 Teile 2,6-Di-t-butylphenol zugesetzt. Die 75 %ige Lösung ist praktisch farblos und besitzt eine Viskosität von ca. 10 000 mPa.s (23 °C). Der Gehalt der Oligourethane an olefinischen Doppelbindungen liegt bei 6,2 % ; an Isocyanuratgruppen bei 10,9 %.

Beispiel 4

212 Teile des Polyisocyanats 3 werden in 104 Teilen Ethylglykolacetat gelöst und bei Raumtemperatur mit 58 Teilen Butanonoxim versetzt. Die Mischung wird auf 80 °C erwärmt und solange gerührt, bis der NCO-Gehalt den Wert von 3,7 % erreicht oder leicht unterschritten hat. Jetzt wird auf 50 °C abgekühlt, mit 42,5 Teilen Hydroxyethylacrylat und 1 Teil Zinndioctoat versetzt und die Temperatur wieder auf etwa 70 °C angehoben. Wenn der NCO-Gehalt auf 0 gesunken ist, wird auf Raumtemperatur abgekühlt und mit 1,5 Teilen 2,6-Di-t-butylphenol versetzt. Die erhaltene 75 %ige Lösung ist klar und fast farblos und besitzt eine Viskosität von ca. 3 500 mPa.s (23 °C). Der Gehalt des Oligourethans (ohne Einbeziehung des Gewichts des Blockierungsmittels) an olefinischen Doppelbindungen liegt bei 3,1 %, an Isocyanuratgruppen bei 10,0 % und an blockierten Isocyanatgruppen (MG = 42) bei 16,7 %.

Beispiel 5

250 Teile des Addukts aus Beispiel 3 werden mit 125 Teilen Xylol verdünnt. Nach Zusatz von 9,4 Teilen Benzophenon sowie 0,9 Teilen Darocur 1173 (handelsüblicher UV-Initiator der Firma Merck, Darmstadt) wird die Lösung mit Hilfe einer Spritzpistole auf ein gebondertes Stahlblech aufgetragen, bis ein Naßauftrag von ca. 60 µm entstanden ist. Nach dem Abdunsten des Lösungsmittels wird das Blech mit einer Geschwindigkeit von 20 m/min unter einem Hanovia-Strahler (80 W/cm, 8 cm Abstand) durchbewegt. Der Überzug ist sofort trocken, klar und völlig farblos und besitzt eine Pendelhärte nach König von 170 Sekunden (DIN 53157).

Beispiel 6

250 Teile des Harzes gemäß Beispiel 3 der EP-OS 53 749 werden in 675 Teilen eines Gemischs aus gleichen Teilen Xylol und Butylacetat gelöst. Hierzu werden 200 Teile des Addukts aus Beispiel 1 gegeben und bis zum Entstehen einer homogenen Mischung verrührt. Hierzu werden noch 22,5 Teile Benzophenon und 2,3 Teile Darocur 1 173 gegeben. Die 40 %ige Lösung besitzt bei 23 °C eine Viskosität von ca. 1 000 mPa.s. In einer Gießbeschichtungsanlage wird ein bedruckter Karton derart beschichtet, daß nach dem Abdunsten der Lösungsmittel ein Trockenauftrag von 15 µm zustande kommt. Der beschichtete Karton wird mit einer Geschwindigkeit von 20 m/min unter einem Hanovia-Strahler wie in Beispiel 5 durchbewegt. Es entsteht ein trockener, glänzender, farbloser und elastischer Überzug mit einer Pendelhärte von 90 Sekunden.

Beispiel 7 (Vergleichsbeispiel)

229 Teile des Polyisocyanats 1 und 152 Teile eines Biuretpolyisocyanats mit einem NCO-Gehalt von 22 %, bestehend aus einem Gemisch von N,N',N''-Tris-(isocyanatohexyl)-biuret mit seinen höheren Homologen werden in 659 Teilen wasserfreien Toluols gelöst und bei Raumtemperatur mit 278 Teilen Hydroxylethylacrylat versetzt. Nach Zusatz von 1,5 Teilen Zinndioctoat wird die Temperatur langsam auf 60 °C erhöht und die Mischung solange gerührt, bis der NCO-Gehalt auf 0 gesunken ist. Nach dem Abkühlen auf Raumtemperatur werden 3,6 Teile 2,6-Di-t-butylphenol zugesetzt und soviel Lösungsmittel durch Vakuumdestillation entfernt, bis die Konzentration 70 % beträgt. Die erhaltene Lösung ist praktisch farblos und besitzt eine Viskosität von 7 000 mPa.s (23 °C). Der Gehalt des Oligourethanes an olefinischen Doppelbindungen (MG = 24) liegt bei 7,8 %, an Isocyanuratgruppen (MG = 126) bei 8,1 %.

Beispiel 8 (Vergleichsbeispiel)

190 Teile des Biuretpolyisocyanats aus Beispiel 7 werden in 364 Teilen wasserfreien Toluols gelöst und bei Raumtemperatur mit 174 Teilen Hydroxyethylacrylat versetzt. Nach Zusatz von 0,5 Teilen Zinndioctoat wird die Temperatur langsam auf 60 °C erhöht und die Mischung solange gerührt, bis der NCO-Gehalt auf 0 gesunken ist. Nach dem Abkühlen werden 1,8 Teile 2,6-Di-t-butylphenol zugesetzt und das Lösungsmittel sowie überschüssiges Hydroxylethylacrylat durch Vakuumdestillation entfernt.

Das zurückbleibende Oligourethan ist farblos, aber leicht trübe und besitzt eine Viskosität von ca. 35 000 mPa.s. Der Gehalt des Oligourethans an olefinischen Doppelbindungen (MG = 24) liegt bei 7,8 %.

Beispiel 9

Jeweils 250 Teile der Addukte aus den Beispielen 1, 7 und 8 werden mit 9,4 Teilen Benzophenon und 0,9 Teilen Darocur 1173 (s. Beispiel 5) versetzt und mit einer Rakel auf gebonderte Stahlbleche so aufgetragen, daß alle drei Oligomere nach Abdunsten der Lösungsmittel einen Trockenauftrag von 25 µm erreichen. Die Bleche werden mit einer Geschwindigkeit von 20 m/min unter einem Hanovia-Strahler (80 W/cm, 8 cm Abstand) hindurchbewegt. Die Überzüge sind danach hart und klebfrei.

Die Überzüge nach Beispiel 1 und 7 sind praktisch farblos, der Überzug nach Beispiel 8 hat eine hell gelbbraune Färbung angenommen.

Die drei Bleche werden an einem Q.U.V.-Weatherometer der Q.-Panel Company, England, einem 1 000-stündigen Bewitterungstest unterzogen.

In der Tabelle sind die 20°-Reflektometer-Werte der nachfolgenden Glanzbeurteilung nach DIN 67530 im Gardner-Reflektometer aufgeführt.

| Beispiel | Anfangswert | n. Bewitterung |
|---|---|---|
| 1 | 89 | 75 |
| 7 | 87 | 68 |
| 8 | 90 | 53 |

Beispiel 10

336 Teile der Polyisocyanatlösung 2 werden bei Raumtemperatur mit 43,2 Teilen 2-Hydroxypropylmethacrylat versetzt. Nach Zugabe von einem Teil Zinndioctoat wird die Temperatur langsam auf 60 °C erhöht und die Mischung 2,5 Stunden gerührt. Nach dem Abkühlen werden 2 Teile 2,6-Di-t-butylphenol zugesetzt. Die erhaltene Lösung besitzt 78 % Festkörper und einen NCO-Gehalt von 6,9 %. Ihre Viskosität bei 23 °C beträgt ca. 6 500 mPa.s. Das Oligomer enthält 2,7 % olefinische Doppelbindungen (MG = 24) und etwa 12,8 % Isocyanuratgruppen (MG = 126).

Beispiel 11

Ein Gemisch aus 84 Teilen eines Polyesterdiols aus Hexandiol-1,6 und Adipinsäure (OH-Zahl : 134) und 4,5 Teilen Butandiol-1,4, gelöst in 84 Teilen DMF, wird mit 76,8 Teilen des Addukts aus Beispiel 10 vermischt und nach Zusatz von 0,8 Teilen 2,6-Di-t-butylphenol auf 60 bis 70 °C erhitzt. Die Viskosität der Mischung nimmt zu, durch schrittweises Verdünnen mit insgesamt 130 Teilen Toluol wird sie stets gut rührbar gehalten. Nach Beenden der Lösungsmittelzugabe wird durch Zugabe von Portionen von jeweils 1 Teil des Addukts nach Beispiel 10 in längeren Zeitabständen die Viskosität solange erhöht, bis sie ca. 10 000 mPa.s bei 23 °C beträgt. Nun werden 8 Teile Butandiol-1,4-diacrylat, 7,7 Teile Benzophenon sowie 0,77 Teile Darocur 1173 (s. Beispiel 5) zugesetzt.

Mit einer Rakel wird die Lösung auf ein Aluminiumblech so aufgebracht, daß ein 30 µm dicker Trockenfilm entsteht. Nach dem Abdunsten der Lösungsmittel entsteht ein fester elastischer Film, der mit Aceton wieder vom Substrat abgelöst werden kann. Nach dem Passieren des beschichteten Bleches unter einer Quecksilberhochdrucklampe, wie in Beispiel 5 beschrieben, zeigt der Überzug nur noch eine schwache Quellneigung in Aceton.

**Patentansprüche**

1. Verfahren zur Herstellung von unter dem Einfluß energiereicher Strahlung vernetzbaren, Isocyanuratgruppen, olefinische Doppelbindungen und gegebenenfalls Isocyanatgruppen aufweisenden Verbindungen, dadurch gekennzeichnet, daß man

(i) gegebenenfalls im Gemisch mit bis zu 5 NCO-Äquivalentprozent an den entsprechenden Uretdiondiisocyanaten vorliegende, durch Trimerisierung eines Teils der Isocyanatgruppen von Hexamethylendiisocyanat und/oder 1-Isocyanato-3,3,5-trimethyl-5-isocyanatomethyl-cyclohexan und anschließende Entfernung von nicht-umgesetztem Ausgangsdiisocyanat durch Dünnschichtdestillation erhaltene, Isocyanuratgruppen aufweisende Polyisocyanate
mit

(ii) mindestens eine gegenüber Isocyanatgruppen reaktionsfähige Gruppe und mindestens eine olefinische Doppelbindung aufweisenden Verbindungen, ausgewählt aus der Gruppe bestehend aus Hydroxylgruppen aufweisenden Estern der Acrylsäure und/oder Methacrylsäure mit mindestens zweiwertigen aliphatischen Alkoholen des Molekulargewichtsbereichs 62 bis 300, unter Urethanbildung zur Reaktion bringt, wobei man die Mengenverhältnisse der Reaktionspartner so wählt, daß im Reaktionsgemisch für jede freie Isocyanatgruppe der Komponente (i) 0,9 bis 1,5 Hydroxylgruppen der Komponente (ii) vorliegen.

2. Verfahren gemäß Anspruch 1, dadurch gekennzeichnet, daß man als Komponente (ii) Hydroxylethyl- und/oder 2-Hydroxypropyl-acrylat und/oder -methacrylat verwendet.

3. Verwendung der gemäß Anspruch 1 und 2 erhältlichen, Isocyanuratgruppen und olefinische Doppelbindungen aufweisenden von monomeren Diisocyanaten befreiten Umsetzungsprodukten als Bindemittel bzw. Bindemittelkomponente in, durch den Einfluß energiereicher Strahlung vernetzbaren, Überzugsmitteln.

**Claims**

1. A process for the production of compounds crosslinkable under the effect of high-energy radiation and containing isocyanurate groups, olefinic double bonds and, optionally, isocyanate groups, characterized in that

(i) isocyanurate polyisocyanates optionally present in admixture with up to 5 NCO equivalent-% of the corresponding uretdione diisocyanates and obtained by partial trimerization of the isocyanate groups of hexamethylene diisocyanate and/or 1-isocyanato-3,3,5-trimethyl-5-isocyanatomethyl cyclohexane and subsequent removal of unreacted starting diisocyanate by thin-layer distillation
are reacted with

(ii) compounds containing at least one isocyanate-reactive group and at least one double bond selected from the group consisting of hydroxyl-containing esters of acrylic acid and/or methacrylic acid with at least dihydric aliphatic alcohols having a molecular weight in the range from 62 to 300

with urethane formation, the quantitative ratios between the reactants being selected so that, for every free isocyanate group of component (i), 0.9 to 1.5 hydroxyl groups of component (ii) are present in the reaction mixture.

2. A process as claimed in claim 1, characterized in that hydroxyethyl and/or 2-hydroxypropyl acrylate and/or methacrylate is/are used as component (ii).

3. The use of the reaction products containing isocyanurate groups and olefinic double bonds and freed from monomeric diisocyanates obtainable by the process claimed in claims 1 and 2 as binder or binder component in coating compositions crosslinkable under the effect of high-energy radiation.

**Revendications**

1. Procédé de production de composés porteurs de groupes isocyanurate, de doubles liaisons oléfiniques et, le cas échéant, de groupes isocyanate, réticulables sous l'influence d'un rayonnement riche en énergie, caractérisé en ce qu'on fait réagir :

(i) des polyisocyanates porteurs de groupes isocyanurate, obtenus par trimérisation d'une partie des groupes isocyanate de l'hexaméthylènediisocyanate et/ou du 1-isocyanato-3,3,5-triméthyl-5-isocyanatométhylcyclohexane, puis élimination par distillation en couche mince du diisocyanate de départ n'ayant pas réagi, se présentant éventuellement en mélange avec jusqu'à 5 %, en équivalents de NCO, des uret-dione-diisocyanates correspondants,

avec

(ii) des composés présentant au moins un groupe apte à réagir vis-à-vis de groupes isocyanate et au moins une double liaison oléfinique, choisis dans la classe constituée d'esters, porteurs de groupes hydroxyle, d'acide acrylique et/ou d'acide méthacrylique avec des alcools aliphatiques au moins divalents de poids moléculaire compris dans l'intervalle de 62 à 300,

en choisissant alors les rapports des quantités des partenaires réactionnels de manière qu'il y ait dans le mélange réactionnel, pour chaque groupe isocyanate libre du composant (i), 0,9 à 1,5 groupe hydroxyle du composant (ii).

2. Procédé suivant la revendication 1, caractérisé en ce qu'on utilise comme composant (ii) l'acrylate et/ou le méthacrylate d'hydroxyéthyle et/ou de 2-hydroxypropyle.

3. Utilisation des produits de réaction porteurs de groupes isocyanurate et de doubles liaisons oléfiniques, débarrassés de diisocyanates monomères, pouvant être obtenus selon les revendications 1 et 2, comme liant ou composant de liants dans des compositions de revêtement réticulables sous l'action d'un rayonnement riche en énergie.